# EUROPEAN PATENT APPLICATION

(11) **EP 4 373 163 A1**
(43) Date of publication of application: **22.05.2024**
(21) Application number: 22841152.6
(22) Date of filing: 23.06.2022
(51) Int. Cl.: H04W 40/22, H04W 88/04, H04W 4/70

(54) **RELAY SELECTION METHOD AND APPARATUS, AND TERMINAL**

(30) Priority: 16.07.2021 CN 202110807060
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/100736
(87) International publication number: WO 2023/284512

(57) **Abstract**

A relay selection method, a device and a user terminal are provided. The relay selection method includes: receiving, by a first user terminal, a relay discovery message sent by at least one relay user terminal, where the relay discovery message includes first indication information; selecting, by the first user terminal, a previous hop relay user terminal to be accessed, according to the first indication information included in the relay discovery message; where the first user terminal is a remote user terminal and/or a user terminal with a relay capability.

## Description

### CROSS REFERENCE OF RELATED APPLICATION

The present disclosure claims a priority of Chinese patent disclosure No. 202110807060.4 filed on July 16, 2021, which is incorporated herein by reference in its entirety.

### TECHNICAL FIELD

The present disclosure relates to the field of communication technology, and in particular, to a relay selection method, a device and a user terminal.

### BACKGROUND

The radio communication in the related art adopts the cellular network, i.e., the user terminal and the network device transmit uplink and downlink data and/or control information through the Universal User to Network Interface (Uu interface).

Direct communication refers to a way that nearby user terminals can transmit data over a short range through a direct communication link (also called Sidelink, bypass or PC5). The wireless interface corresponding to Sidelink is called the direct communication interface (also called Sidelink interface, bypass interface or PC5 interface).

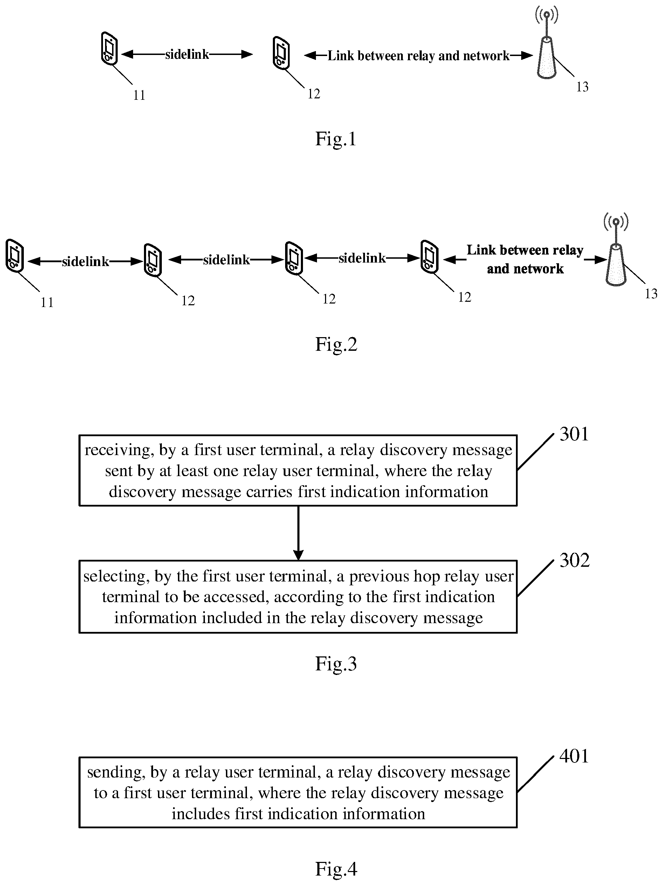

In order to expand network coverage, one solution is to introduce a user terminal-to-network device (UE-to-Network, U2N) relay (UE-to-Network Relay, hereinafter referred to as relay). If a direct communication interface is used between the relay and the remote user terminal, the relay is also called a sidelink relay (SL relay). The relay itself can be a user terminal with relay functionality. As shown in Fig. 1, for UE-to-Network relay, the interface between the relay user terminal 12 and the network device 13 uses the Uu interface, and the interface between the relay user terminal 12 and the relayed user terminal 11 (which can be referred to as the remote user terminal) uses Sidelink interface. The link (Uu link) between the relay and the network may be called the backhaul link for the remote user terminal.

Under normal circumstances, one-hop relay is sufficient, so currently only one-hop relay is supported for sidelink relay, that is, the remote user terminal accesses the relay user terminal through sidelink, and the relay user terminal and network equipment can be directly connected. However, for some special scenarios, such as earthquake scenarios, the entire network may be paralyzed, so multi-hop relays may be needed. That is, if the remote user terminal cannot connect to the network through a relay, multi-hop relays may be introduced. There is currently no corresponding solution for how to design relay discovery messages in a multi-hop relay scenario.

### SUMMARY

The purpose of the embodiments of the present disclosure is to provide a relay selection method, device and user terminal to solve the problem of how to design a relay discovery message in a multi-hop relay scenario in related technologies.

In order to solve the above problems, embodiments of the present disclosure provide a relay selection method, including:
receiving, by a first user terminal, a relay discovery message sent by at least one relay user terminal, where the relay discovery message includes first indication information;
selecting, by the first user terminal, a previous hop relay user terminal to be accessed, according to the first indication information included in the relay discovery message;
where the first user terminal is a remote user terminal and/or a user terminal with a relay capability.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device.

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

Optionally, when the first user terminal is a user terminal with the relay capability, prior to the selecting by the first user terminal the previous hop relay user terminal to be accessed according to the first indication information included in the relay discovery message, the method further includes:
determining, by the user terminal with relay capability, whether to activate the relay capability.

Optionally, when the first user terminal is a user terminal with the relay capability, prior to the selecting by the first user terminal the previous hop relay user terminal to be accessed according to the first indication information included in the relay discovery message, the method further includes:
determining, based on the relay discovery message, by the user terminal with relay capability, whether the user terminal with the relay capability is capable of establishing a relay connection with the relay user terminal corresponding to the relay discovery message.

Optionally, the determining, based on the relay discovery message, by the user terminal with relay capability, whether the user terminal with the relay capability is capable of establishing the relay connection with the relay user terminal corresponding to the relay discovery message includes:
based on the relay discovery message, determining that the user terminal with relay capability is capable of establishing a relay connection with a relay user terminal that meets a first condition; where the first condition includes at least one of the following:
the user terminal with relay capability supports a relay type currently used by the relay user terminal indicated by the relay discovery message;
load information of the relay user terminal indicated by the relay discovery message satisfies a second condition; or
current state information of the relay user terminal indicated by the relay discovery message satisfies a third condition.

Optionally, the second condition includes: a load of the relay user terminal is lower than a first threshold.

Optionally, the third condition includes at least one of the following:
a power of the relay user terminal is higher than a second threshold;
a speed of the relay user terminal is lower than a third threshold; or
a load of the relay user terminal is lower than a fourth threshold.

Optionally, the selecting by the first user terminal the previous hop relay user terminal to be accessed according to the first indication information included in the relay discovery message includes:
when a relay network only supports a single path, the user terminal with relay capability selecting a relay user terminal from the relay user terminals that meet the first condition as the previous hop relay user terminal to be accessed;
   or,
when the relay network supports multipath, the user terminal with relay capability selecting one or more relay user terminals from the relay user terminals that meet the first condition as the previous hop relay user terminal to be accessed.

A relay selection method is further provided in an embodiment of the present disclosure, including:
sending, by a relay user terminal, a relay discovery message to a first user terminal, where the relay discovery message includes first indication information;
where the first user terminal is a remote user terminal and/or a user terminal with a relay capability; the first indication information is configured to assist the first user terminal in selecting a previous hop relay user terminal to be accessed.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

A relay selection device is further provided in an embodiment of the present disclosure, including:
a receiving unit, configured to receive a relay discovery message sent by at least one relay user terminal, where the relay discovery message includes first indication information;
a selection unit, configured to select a previous hop relay user terminal to be accessed, according to the first indication information included in the relay discovery message;
where the first user terminal is a remote user terminal and/or a user terminal with a relay capability.

A user terminal is further provided in an embodiment of the present disclosure, where the user terminal is a first user terminal and including a memory, a transceiver, and a processor, where
the memory is configured to store computer programs; the transceiver is configured to send and receive data under a control of the processor; the processor is configured to read the computer programs in the memory to perform:
receiving a relay discovery message sent by at least one relay user terminal, where the relay discovery message includes first indication information;
selecting a previous hop relay user terminal to be accessed, according to the first indication information included in the relay discovery message;
where the first user terminal is a remote user terminal and/or a user terminal with a relay capability.
Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device.

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

Optionally, the processor is configured to read the computer programs in the memory to perform:
determining whether to activate the relay capability.

Optionally, the processor is configured to read the computer programs in the memory to perform:
determining, based on the relay discovery message, whether a relay connection with the relay user terminal corresponding to the relay discovery message is capable of being established.

Optionally, the processor is configured to read the computer programs in the memory to perform:
based on the relay discovery message, determining that the user terminal with relay capability is capable of establishing a relay connection with a relay user terminal that meets a first condition; where the first condition includes at least one of the following:
the user terminal with relay capability supports a relay type currently used by the relay user terminal indicated by the relay discovery message;
load information of the relay user terminal indicated by the relay discovery message satisfies a second condition; or
current state information of the relay user terminal indicated by the relay discovery message satisfies a third condition.

Optionally, the second condition includes: a load of the relay user terminal is lower than a first threshold.

Optionally, the third condition includes at least one of the following:
a power of the relay user terminal is higher than a second threshold;
a speed of the relay user terminal is lower than a third threshold; or
a load of the relay user terminal is lower than a fourth threshold.

Optionally, the processor is configured to read the computer programs in the memory to perform:
when a relay network only supports a single path, selecting a relay user terminal from the relay user terminals that meet the first condition as the previous hop relay user terminal to be accessed;
   or,
when the relay network supports multipath, selecting one or more relay user terminals from the relay user terminals that meet the first condition as the previous hop relay user terminal to be accessed.

A relay selection device is further provided in an embodiment of the present disclosure, including:
a sending unit, configured to send a relay discovery message to a first user terminal, where the relay discovery message includes first indication information;
where the first user terminal is a remote user terminal and/or a user terminal with a relay capability; the first indication information is configured to assist the first user terminal in selecting a previous hop relay user terminal to be accessed.

A user terminal is further provided in an embodiment of the present disclosure, where the user terminal is a relay user terminal, including a memory, a transceiver, and a processor, where
the memory is configured to store computer programs; the transceiver is configured to send and receive data under a control of the processor; the processor is configured to read the computer programs in the memory to perform:
send a relay discovery message to a first user terminal, where the relay discovery message includes first indication information;;
where the first user terminal is a remote user terminal and/or a user terminal with a relay capability; the first indication information is configured to assist the first user terminal in selecting a previous hop relay user terminal to be accessed.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device.

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

A processor-readable storage medium is further provided in an embodiment of the present disclosure, where a computer program is stored in the processor-readable storage medium, where the computer program is configured to enable the processor to perform the method hereinabove.

The above technical solution of the present disclosure has at least the following beneficial effects:
According to the relay selection method, the device and the user terminal of the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

### BRIEF DESCRIPTION OF THE DRAWINGS

Fig. 1 is a schematic view of a relay from a user terminal to a network device in related technologies;
Fig. 2 is a schematic view of multi-hop relay from a user terminal to a network device in an embodiment of the present disclosure;
Fig. 3 is a first flow chart of a relay selection method in an embodiment of the present disclosure;
Fig. 4 is a second flow chart of a relay selection method in an embodiment of the present disclosure;
Fig. 5 is a schematic view of Example 1 in an embodiment of the present disclosure;
Fig. 6 is a schematic view of Example 2 in an embodiment of the present disclosure;
Fig. 7 is a first schematic views of a relay selection device in an embodiment of the present disclosure;
Fig. 8 is a first schematic view of a user terminal in an embodiment of the present disclosure;
Fig. 9 is a second schematic views of a relay selection device in an embodiment of the present disclosure; and
Fig. 10 is a second schematic view of a user terminal in an embodiment of the present disclosure.

### DETAILED DESCRIPTION

In order to make the technical problems, technical solutions and advantages to be solved by the present disclosure clearer, a detailed description will be given below with reference to the accompanying drawings and specific embodiments.

FIG. 2 shows a block diagram of a wireless communication system to which embodiments of the present disclosure are applicable. The wireless communication system includes a remote user terminal 11, a multi-hop relay user terminal 12 and a network device 13. Among them, the remote user terminal 11 and the relay user terminal 12 may also be called user terminal equipment or user equipment (User Equipment, UE). It should be noted that the embodiment of the present application does not limit the specific types of the remote user terminal 11 and the relay user terminal 12. The network device 13 may be a base station, a centralized unit (Central Unit, CU), a distributed unit (Distributed Unit, DU) or a core network. It should be noted that in this embodiment, only the New Radio (NR) interface is used. The base station in the system is taken as an example, but the specific type of the base station is not limited.

In the embodiment of the present disclosure, the term "and/or" describes the association relationship of associated objects, indicating that there can be three relationships, for example, A and/or B, which can mean: A exists alone, A and B exist simultaneously, and B exists alone. The character "/" generally indicates that the related objects are in an "or" relationship.

In the embodiments of the present disclosure, the term "plurality" refers to two or more than two, and other quantifiers are similar to it.

The technical solutions in the embodiments of the present application will be clearly and completely described below with reference to the accompanying drawings in the embodiments of the present application. Obviously, the described embodiments are only some of the embodiments of the present application, not all of the embodiments. Based on the embodiments in the present disclosure, all other embodiments obtained by those of ordinary skill in the art without creative efforts fall within the scope of protection of the present disclosure.

The technical solutions provided by the embodiments of the present disclosure can be applied to a variety of systems, especially fifth-generation mobile communications (Fifth-generation, 5G) systems. For example, applicable systems may be global system of mobile communication (GSM) system, code division multiple access (code division multiple access, CDMA) system, wideband code division multiple access (Wideband Code Division Multiple Access, WCDMA) general packet Wireless service (general packet radio service, GPRS) system, long term evolution (long term evolution, LTE) system, LTE frequency division duplex (FDD) system, LTE time division duplex (TDD) system, Long term evolution advanced (LTE-A) system, universal mobile telecommunication system (UMTS), worldwide interoperability for microwave access (WiMAX) system, 5G New Radio, NR) system, etc. These various systems include user terminal equipment and network equipment. The system may also include core network parts, such as the Evolved Packet System (EPS), 5G System (5GS), etc.

The user terminal device involved in the embodiments of the present disclosure may be a device that provides voice and/or data connectivity to users, a handheld device with a wireless connection function, or other processing devices connected to a wireless modem, etc. In different systems, the names of user terminal equipment may also be different. For example, in a 5G system, the user terminal equipment may be called User Equipment (UE). Wireless user terminal equipment can communicate with one or more core networks (Core Network, CN) via a Radio Access Network (RAN). The wireless user terminal equipment can be a mobile user terminal equipment, such as a mobile phone (also known as a "cellular phone") and computers with mobile user terminal devices, which may be, for example, portable, pocket-sized, handheld, computer-built-in or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistants (PDA) and other equipment. Wireless user terminal equipment may also be called a system, a subscriber unit, a subscriber station, a mobile station, a mobile station, a remote station, or an access point., remote user terminal equipment (remote user terminal), access user terminal equipment (access user terminal), user user terminal equipment (user user terminal), user agent (user agent), user device (user device), are not limited in the embodiments of the present disclosure.

The network device involved in the embodiment of the present disclosure may be a base station, and the base station may support multiple cells that provide services for user terminals. Depending on the specific application, a base station can also be called an access point, or it can be a device in the access network that communicates with wireless user terminal equipment through one or more sectors on the air interface, or it can be named by another name. The network device may be used to exchange received air frames with Internet Protocol (IP) packets and act as a router between the wireless user terminal device and the rest of the access network, which may include IP Communications network. Network devices also coordinate attribute management of the air interface. For example, the network equipment involved in the embodiments of the present disclosure may be a network equipment (Base Transceiver Station, BTS) in the Global System for Mobile communications (GSM) or Code Division Multiple Access (CDMA).), it can also be a network device (NodeB) in Wide-band Code Division Multiple Access (WCDMA), or it can be an evolutionary network device in a long term evolution (LTE) system (evolutional Node B, eNB or e- NodeB), 5G base station (gNB) in the 5G network architecture (next generation system), or home evolved base station (Home evolved Node B, HeNB), relay node (relay node), home base station (femto), pico base station (pico), etc., are not limited in the embodiments of the present disclosure. In some network structures, network devices may include centralized unit (CU) nodes and distributed unit (DU) nodes, and the centralized units and distributed units may also be arranged geographically separately.

As shown in Fig. 3, an embodiment of the present disclosure provides a relay selection method, which includes:
Step 301: receiving, by a first user terminal, a relay discovery message sent by at least one relay user terminal, where the relay discovery message includes first indication information;
Step 302: selecting, by the first user terminal, a previous hop relay user terminal to be accessed, according to the first indication information included in the relay discovery message;
where the first user terminal is a remote user terminal and/or a user terminal with a relay capability.

According to the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

Optionally, each relay user terminal sends a relay discovery message respectively, and each relay discovery message includes corresponding first indication information; the first indication information corresponds to the relay user terminal. For example, relay user terminal 1 sends relay discovery message 1, and relay discovery message 1 includes the first indication information corresponding to relay user terminal 1; relay user terminal 2 sends relay discovery message 2, and relay discovery message 2 includes the first information corresponding to the relay user terminal 2.

In at least one embodiment of the present disclosure, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal, e.g., L2 relay and/or L3 relay;
current state information of the relay user terminal; or
system information required for accessing a target object, for example, necessary system information required for accessing the target network device, such as Universal Access Control (Unified Access Control, UAC) information.

Optionally, the number of paths corresponding to the relay user terminal is greater than or equal to 1, that is, the relay user terminal may only support a single path, or the relay user terminal may also support multi-path, which is not specifically limited here.

As an embodiment, the target object includes: target user terminal and/or target network device. For a user terminal-to-UE (UE-to-UE, U2U) multi-hop relay scenario, the target object is a target user terminal; for a U2N multi-hop relay scenario, the target object is a target network device.

Correspondingly, the identification information of the target user terminal includes: the direct communication target address of the target user terminal (such as the L2 target address); or a newly introduced target identification;
And/or, the identification information of the target network device includes: Public Land Mobile Network identification (Public Land Mobile Network Identity, PLMN ID), and/or, cell identification (Identity, ID).

As another embodiment, the current state information of the relay user terminal includes at least one of the following:
a power information of the relay user terminal;
load information of the relay user terminal; or
a speed of the relay user terminal.

In at least one embodiment of the present disclosure, when the first user terminal is a user terminal with relay capability, before step 302, the method further includes:
determining, by the user terminal with relay capability, whether to activate the relay capability;
It should be noted that when a user terminal with relay capability determines whether to activate the relay capability, it may refer to the relay discovery message sent by the relay user terminal connected to the user terminal, or it may be determined by the user terminal with relay capability itself, or the user terminal with relay capability performs a determination according to the instructions of the network or the relay user terminal, which is not specifically limited here.

In at least one embodiment of the present disclosure, when the first user terminal is a user terminal with relay capability, before step 302, the method further includes:
determining, based on the relay discovery message, by the user terminal with relay capability, whether the user terminal with the relay capability is capable of establishing a relay connection with the relay user terminal corresponding to the relay discovery message.
where the determining, based on the relay discovery message, by the user terminal with relay capability, whether the user terminal with the relay capability is capable of establishing the relay connection with the relay user terminal corresponding to the relay discovery message includes:
   based on the relay discovery message, determining that the user terminal with relay capability is capable of establishing a relay connection with a relay user terminal that meets a first condition; where the first condition includes at least one of the following:
   the user terminal with relay capability supports a relay type currently used by the relay user terminal indicated by the relay discovery message;
   load information of the relay user terminal indicated by the relay discovery message satisfies a second condition; or
   current state information of the relay user terminal indicated by the relay discovery message satisfies a third condition.
Optionally, the second condition includes: a load of the relay user terminal is lower than a first threshold.
Optionally, the third condition includes at least one of the following:
   a power of the relay user terminal is higher than a second threshold;
   a speed of the relay user terminal is lower than a third threshold; or
   a load of the relay user terminal is lower than a fourth threshold.
   It should be noted that if the first user terminal receives multiple relay discovery messages, it determines whether a relay connection can be established with the relay user terminal corresponding to the relay discovery message, according to the relay discovery messages.
Correspondingly, step 302 includes:
   when a relay network only supports a single path, the user terminal with relay capability selecting a relay user terminal from the relay user terminals that meet the first condition as the previous hop relay user terminal to be accessed;
      or,
   when the relay network supports multipath, the user terminal with relay capability selecting one or more relay user terminals from the relay user terminals that meet the first condition as the previous hop relay user terminal to be accessed.
In at least one embodiment of the present disclosure, when the first user terminal is a remote user terminal, the remote user terminal needs to consider the first indication information included in the relay discovery message when selecting the previous hop relay user terminal to access; In other words, the factors that the remote user terminal needs to consider when selecting the previous hop relay user terminal to access include one or a combination of the following:
   identification information of a target object capable of being accessed through the relay user terminal;
   identification information of a target object capable of being accessed through each path corresponding to the relay user terminal;
   a minimum number of hops required for the relay user terminal to access a target object;
   a number of hops required for the relay user terminal to access a target object on each path corresponding to the relay user terminal;
   a channel quality between the relay user terminal and a previous hop node of the relay user terminal on each path corresponding to the relay user terminal;
   a channel quality between the two nodes of each hop on each path corresponding to the relay user terminal;
   load information of the relay user terminal on each path corresponding to the relay user terminal;
   load information of the relay user terminal corresponding to each hop on each path corresponding to the relay user terminal;
   a relay type currently used by the relay user terminal, e.g., L2 relay and/or L3 relay;
   current state information of the relay user terminal, e.g., a move speed and electric quantity of relay user terminal; or
   system information required for accessing a target object, for example, necessary system information required for accessing the target network device, such as Universal Access Control (Unified Access Control, UAC) information.
According to the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.
As shown in Fig. 4, an embodiment of the present disclosure also provides a relay selection method, which method includes:
   Step 401: sending, by a relay user terminal, a relay discovery message to a first user terminal, where the relay discovery message includes first indication information;
   where the first user terminal is a remote user terminal and/or a user terminal with a relay capability; the first indication information is configured to assist the first user terminal in selecting a previous hop relay user terminal to be accessed.
In at least one embodiment of the present disclosure, the first indication information includes at least one of the following:
   identification information of a target object capable of being accessed through the relay user terminal;
   identification information of a target object capable of being accessed through each path corresponding to the relay user terminal;
   a minimum number of hops required for the relay user terminal to access a target object;
   a number of hops required for the relay user terminal to access a target object on each path corresponding to the relay user terminal;
   a channel quality between the relay user terminal and a previous hop node of the relay user terminal on each path corresponding to the relay user terminal;
   a channel quality between the two nodes of each hop on each path corresponding to the relay user terminal;
   load information of the relay user terminal on each path corresponding to the relay user terminal;
   load information of the relay user terminal corresponding to each hop on each path corresponding to the relay user terminal;
   a relay type currently used by the relay user terminal, e.g., L2 relay and/or L3 relay;
   current state information of the relay user terminal, e.g., a move speed and electric quantity of relay user terminal; or
   system information required for accessing a target object, for example, necessary system information required for accessing the target network device, such as Universal Access Control (Unified Access Control, UAC) information.

Optionally, the number of paths corresponding to the relay user terminal is greater than or equal to 1, that is, the relay user terminal may only support a single path, or the relay user terminal may also support multi-path, which is not specifically limited here.

As an embodiment, the target object includes: target user terminal and/or target network device.

Correspondingly, the identification information of the target user terminal includes: the direct communication target address of the target user terminal (such as the L2 target address); or a newly introduced target identification;
and/or, the identification information of the target network device includes: PLMN ID, and/or cell ID.

As another embodiment, the current state information of the relay user terminal includes at least one of the following :
a power information of the relay user terminal;
load information of the relay user terminal; or
a speed of the relay user terminal.

According to the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

In order to describe the relay selection method in an embodiment of the present disclosure more clearly, the method will be described below with two examples.

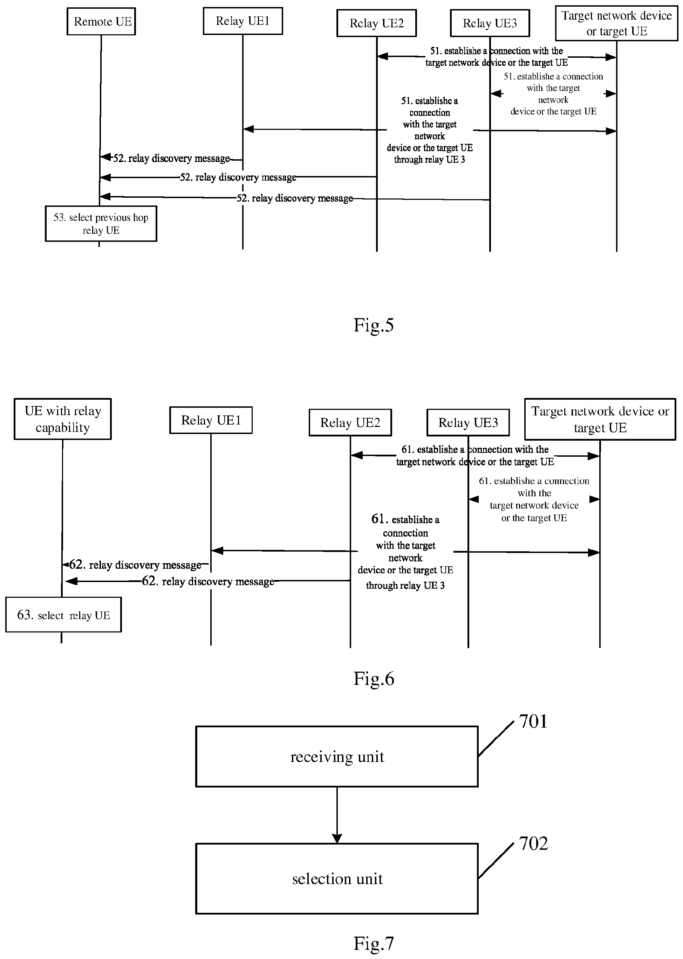

Example 1: the remote UE selects the previous hop relay UE based on the relay discovery message sent by the relay UE, as shown in Fig. 5:
Step 51: the relay UE establishes a connection with the target network device or the target UE;
There are three relay UEs in this example: relay UE1, relay UE2 and relay UE3. The relay UE2 and the relay UE3 directly establish connections with the target network device or the target UE. The relay UE1 establishes a connection with the target network device or the target UE through the relay UE3.

Step 52: relay UE1, relay UE2 and relay UE3 send relay discovery messages respectively;

In this example, the remote UE can receive the relay discovery message sent by relay UE1, relay UE2 and relay UE3.

Each relay discovery message includes first indication information. The first indication information includes but is not limited to one or a combination of the following information:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal, e.g., L2 relay and/or L3 relay;
current state information of the relay user terminal, e.g., a move speed and electric quantity of relay user terminal; or
system information required for accessing a target object, for example, necessary system information required for accessing the target network device, such as Universal Access Control (Unified Access Control, UAC) information.

Step 53: the remote UE performs the selection of the previous hop relay UE; the remote UE selects the previous hop relay UE to be accessed based on the relay discovery messages sent by the relay UE1, relay UE2 and relay UE3, factors that need to be considered include one or a combination of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal, e.g., L2 relay and/or L3 relay;
current state information of the relay user terminal, e.g., a move speed and electric quantity of relay user terminal; or
system information required for accessing a target object, for example, necessary system information required for accessing the target network device, such as Universal Access Control (Unified Access Control, UAC) information.

For example, the remote UE may select the relay UE with the smallest number of hops based on the "minimum number of hops required for the relay UE to access the target network device (U2N relay)" included in the relay discovery message. For example, in this example, relay UE2 and relay UE3 need 1 hop to access the target network device or the target UE, but relay UE1 needs 2 hops to access the target network device, so the remote UE can give priority to relay UE2 or the target UE. Relay UE3 access. How to specifically select UE2 or UE3 may depend on the implementation of the remote UE, or may be further combined with other information in the first indication information, such as the channel quality between the relay user terminal and the target network device. If the channel quality is better than the channel quality between UE3 and the target network device, the remote UE can choose to relay UE2 to access.

Example 2: a UE with relay function selects the previous hop relay user terminal according to the relay discovery message sent by the relay UE, as shown in Fig. 6:
Step 61: the relay UE establishes a connection with the target network device or the target UE;
There are three relay UEs in this example: relay UE1, relay UE2 and relay UE3. The relay UE2 and the relay UE3 directly establish connections with the target network device or the target UE. The relay UE1 establishes a connection with the target network device or the target UE through the relay UE3.

Step 62: relay UE1 and relay UE2 send relay discovery messages respectively;
In this example, the UE with the relay function can receive the relay discovery message sent by the relay UE1 and the relay UE2.

Each relay discovery message includes first indication information. The first indication information includes but is not limited to one or a combination of the following information:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal, e.g., L2 relay and/or L3 relay;
current state information of the relay user terminal, e.g., a move speed and electric quantity of relay user terminal; or
system information required for accessing a target object, for example, necessary system information required for accessing the target network device, such as Universal Access Control (Unified Access Control, UAC) information.

Optionally, the relay discovery message may also include a direct communication interface channel quality threshold used for relay function activation determination.

Step 63: The UE with the relay function performs the selection of the previous hop relay UE;

The UE with a specific relay function determines whether to activate the relay function and/or whether to establish a relay connection with the relay UE according to the relay discovery message sent by the relay UE. The conditions for the UE with the relay function to determine whether to establish a relay connection with the relay UE may be but are not limited to one or a combination of the following:
the UE with the relay function supports the relay working mode currently used by the relay UE (such as L2 relay, L3 relay) indicated in the current relay discovery message of the relay UE;
The load information of the relay UE or the status information of the relay UE indicated in the relay discovery message of the current relay UE meets specific conditions, such as the load is lower than a certain threshold, or the speed is lower than a certain threshold, or the power is higher than a certain threshold.

Furthermore, if the multi-hop relay network only supports a single path, a UE with the relay function can only select one relay UE to access from multiple relay UEs that meet the conditions. The specific selection depends on the UE's implementation. If the multi-hop relay network can support multi-path, a UE with relay function can choose to establish connections with multiple relay UEs that meet the conditions.

For example, if "the relay type currently used by the relay UE" included in the relay discovery message of relay UE1 is L2 relay, and if "the relay type currently used by the relay UE" included in the relay discovery message of relay UE2 If the "relay type currently used by the UE" is L3 relay, and the UE with the relay function only supports L2 relay, the relay UE1 will be selected to access, and the relay UE1 will be selected as its previous hop relay..

It should be noted that a UE with the relay function finds multiple relay UEs that meet the conditions at the same time. If the multi-hop relay network only supports a single path, the UE with the relay function can select one of the relay UEs to be accessed, the specific selection depends on the implementation of the UE with relay function. If the multi-hop relay network can support multi-path, a UE with relay function can choose to establish connections with multiple relay UEs.

As shown in Fig. 7, an embodiment of the present disclosure also provides a relay selection device, including:
a receiving unit 701, configured to receive a relay discovery message sent by at least one relay user terminal, where the relay discovery message includes first indication information;
a selection unit 702, configured to select a previous hop relay user terminal to be accessed, according to the first indication information included in the relay discovery message;
where the first user terminal is a remote user terminal and/or a user terminal with a relay capability.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device.

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

Optionally, when the first user terminal is a user terminal with the relay capability, the device further comprises:
a first determining unit, configured to, determine whether to activate the relay capability.

Optionally, when the first user terminal is a user terminal with the relay capability, the device further comprises:
a second determining unit, configured to determine, based on the relay discovery message whether the user terminal with the relay capability is capable of establishing a relay connection with the relay user terminal corresponding to the relay discovery message.

Optionally, the second determining unit includes:
a first determining sub-unit, configured to, based on the relay discovery message, determine that the user terminal with relay capability is capable of establishing a relay connection with a relay user terminal that meets a first condition; where the first condition includes at least one of the following:
the user terminal with relay capability supports a relay type currently used by the relay user terminal indicated by the relay discovery message;
load information of the relay user terminal indicated by the relay discovery message satisfies a second condition; or
current state information of the relay user terminal indicated by the relay discovery message satisfies a third condition.

Optionally, the second condition includes: a load of the relay user terminal is lower than a first threshold.

Optionally, the third condition includes at least one of the following:
a power of the relay user terminal is higher than a second threshold;
a speed of the relay user terminal is lower than a third threshold; or
a load of the relay user terminal is lower than a fourth threshold.

Optionally, the selection unit 702 includes:
a first selection sub-unit, configured to, when a relay network only supports a single path, select a relay user terminal from the relay user terminals that meet the first condition as the previous hop relay user terminal to be accessed;
   or,
a second selection sub-unit, configured to, when the relay network supports multipath, select one or more relay user terminals from the relay user terminals that meet the first condition as the previous hop relay user terminal to be accessed.

According to the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

It should be noted that the relay selection device provided by the embodiments of the present disclosure is a device capable of executing the above-mentioned relay selection method, then all embodiments of the above-mentioned relay selection method are applicable to this device, and can achieve the same or similar beneficial effects.

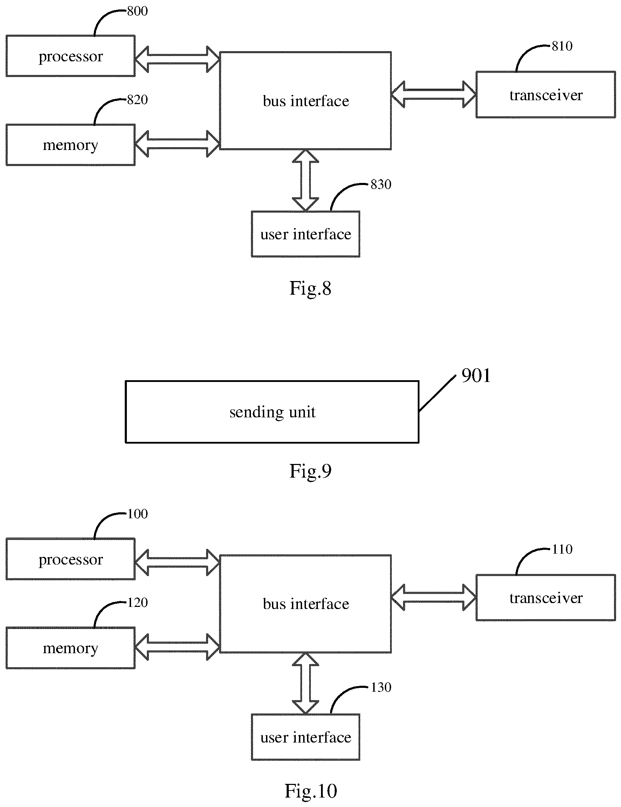

As shown in Fig. 8, an embodiment of the present disclosure also provides a user terminal. The user terminal is a first user terminal and includes a memory 820, a transceiver 810, and a processor 800, where

the memory 820 is configured to store computer programs; the transceiver 810 is configured to send and receive data under a control of the processor 800; the processor 800 is configured to read the computer programs in the memory 820 to perform:
receiving a relay discovery message sent by at least one relay user terminal, where the relay discovery message includes first indication information;
selecting a previous hop relay user terminal to be accessed, according to the first indication information included in the relay discovery message;
where the first user terminal is a remote user terminal and/or a user terminal with a relay capability.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device.

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

Optionally, the processor is configured to read the computer programs in the memory to perform:
determining whether to activate the relay capability.

Optionally, the processor is configured to read the computer programs in the memory to perform:
determining, based on the relay discovery message, whether a relay connection with the relay user terminal corresponding to the relay discovery message is capable of being established.

Optionally, the processor is configured to read the computer programs in the memory to perform:
based on the relay discovery message, determining that the user terminal with relay capability is capable of establishing a relay connection with a relay user terminal that meets a first condition; where the first condition includes at least one of the following:
the user terminal with relay capability supports a relay type currently used by the relay user terminal indicated by the relay discovery message;
load information of the relay user terminal indicated by the relay discovery message satisfies a second condition; or
current state information of the relay user terminal indicated by the relay discovery message satisfies a third condition.

Optionally, the second condition includes: a load of the relay user terminal is lower than a first threshold.

Optionally, the third condition includes at least one of the following:
a power of the relay user terminal is higher than a second threshold;
a speed of the relay user terminal is lower than a third threshold; or
a load of the relay user terminal is lower than a fourth threshold.

Optionally, the processor is configured to read the computer programs in the memory to perform:
when a relay network only supports a single path, selecting a relay user terminal from the relay user terminals that meet the first condition as the previous hop relay user terminal to be accessed;
   or,
when the relay network supports multipath, selecting one or more relay user terminals from the relay user terminals that meet the first condition as the previous hop relay user terminal to be accessed.

In FIG. 8, the bus architecture may include any number of interconnected buses and bridges, specifically one or more processors represented by processor 800 and various circuits of the memory represented by memory 820 are linked together. The bus architecture can also link together various other circuits such as peripherals, voltage regulators, and power management circuits, which are all well known in the art and therefore will not be described further herein. The bus interface provides the interface. The transceiver 810 may be a plurality of elements, including a transmitter and a receiver, providing a unit for communicating with various other devices over transmission media, including wireless channels, wired channels, optical cables, etc. Transmission medium. For different user equipment, the user interface 830 can also be an interface that can connect external and internal required equipment. The connected equipment includes but is not limited to a keypad, a display, a speaker, a microphone, a joystick, etc.

The processor 800 is responsible for managing the bus architecture and general processing, and the memory 820 can store data used by the processor 800 when performing operations.

Optionally, the processor 800 may be a central processing unit (Central Processing Unit, CPU), an application specific integrated circuit (Application Specific Integrated Circuit, ASIC), a field programmable gate array (Field-Programmable Gate Array, FPGA) or Complex Programmable Logic Device (CPLD) processors can also adopt multi-core architecture.

The processor is configured to execute any of the methods provided by the embodiments of the present application according to the obtained executable instructions by calling the computer program stored in the memory. The processor and memory can also be physically separated.

According to the relay selection method, the device and the user terminal of the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

It should be noted that the user terminal provided by the embodiments of the present disclosure is a user terminal that can perform the above relay selection method, then all embodiments of the above relay selection method are applicable to the user terminal, and can achieve the same or similar beneficial effects..

As shown in Fig. 9, an embodiment of the present disclosure also provides a relay selection device, which includes:
a sending unit 901, configured to send a relay discovery message to a first user terminal, where the relay discovery message includes first indication information;
where the first user terminal is a remote user terminal and/or a user terminal with a relay capability; the first indication information is configured to assist the first user terminal in selecting a previous hop relay user terminal to be accessed.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

According to the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

It should be noted that the relay selection device provided by the embodiments of the present disclosure is a device capable of executing the above-mentioned relay selection method, then all embodiments of the above-mentioned relay selection method are applicable to this device, and can achieve the same or similar beneficial effects.

As shown in Fig. 10, an embodiment of the present disclosure also provides a user terminal, where the user terminal is a relay user terminal, including a memory 120, a transceiver 110, and a processor 100, where
the memory 120 is configured to store computer programs; the transceiver 110 is configured to send and receive data under a control of the processor 100; the processor 100 is configured to read the computer programs in the memory 120 to perform:
send a relay discovery message to a first user terminal, where the relay discovery message includes first indication information;;
where the first user terminal is a remote user terminal and/or a user terminal with a relay capability; the first indication information is configured to assist the first user terminal in selecting a previous hop relay user terminal to be accessed.

Optionally, the first indication information includes at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

Optionally, the target object includes: a target user terminal and/or a target network device.

Optionally, the identification information of the target user terminal includes: a direct communication target address of the target user terminal;
and/or,
identification information of the target network device includes: a Public Land Mobile Network Identity (PLMN ID), and/or a cell ID.

Optionally, the current state information of the relay user terminal includes at least one of the following:
a power information of the relay user terminal;
load information of the relay user terminal; or
a speed of the relay user terminal.

In FIG. 10, the bus architecture may include any number of interconnected buses and bridges, specifically one or more processors represented by the processor 100 and various circuits of the memory represented by the memory 120 are linked together. The bus architecture can also link together various other circuits such as peripherals, voltage regulators, and power management circuits, which are all well known in the art and therefore will not be described further herein. The bus interface provides the interface. The transceiver 110 may be a plurality of elements, including a transmitter and a receiver, providing a unit for communicating with various other devices over transmission media, including wireless channels, wired channels, optical cables, etc. Transmission medium. For different user equipment, the user interface 130 can also be an interface capable of externally connecting internal and external required equipment. The connected equipment includes but is not limited to a keypad, a display, a speaker, a microphone, a joystick, etc.

The processor 100 is responsible for managing the bus architecture and general processing, and the memory 120 can store data used by the processor 100 when performing operations.

Optionally, the processor 100 can be a CPU, ASIC, FPGA or CPLD, and the processor can also adopt a multi-core architecture.

The processor is configured to execute any of the methods provided by the embodiments of the present application according to the obtained executable instructions by calling the computer program stored in the memory. The processor and memory can also be physically separated.

According to the embodiments of the present disclosure, the relay discovery message sent by the relay user terminal includes specific first indication information, and the user terminal with the relay function and/or the remote user terminal selects, according to the first indication information, a previous hop relay user terminal to be accessed, which provides a design of relay discovery message in multi-hop relay scenarios, thereby achieving a multi-hop relay system composed of sidelink relays.

It should be noted that, if the user terminal provided by the embodiments of the present disclosure is a user terminal capable of executing the above relay selection method, then all embodiments of the above relay selection method are applicable to the user terminal, and can achieve the same or similar beneficial effects.

It should be further noted that the division of units in the embodiments of the present application is schematic and is only a logical function division. In actual implementation, there may be other division methods. In addition, each functional unit in each embodiment of the present application can be integrated into one processing unit, each unit can exist physically alone, or two or more units can be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present application is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program code.

Embodiments of the present disclosure also provide a processor-readable storage medium, the processor-readable storage medium stores a computer program, the computer program is configured to cause the processor to execute the relay selection method as described above; The processor-readable storage medium may be any available media or data storage device that the processor can access, including but not limited to magnetic storage (such as floppy disks, hard disks, magnetic tapes, magneto-optical disks (Magneto-Optical Disk, MO), etc.), Optical storage (such as Compact Disk (CD), Digital Versatile Disc (DVD), Blu-ray Disc (BD), High-Definition Versatile Disc (HVD), etc.), and Semiconductor memory (such as ROM, Erasable Programmable Read-Only Memory (EPROM), Electrically Erasable Programmable Read-Only Memory (EEPROM), non-volatile memory (NAND FLASH), solid state drive (Solid State Disk or Solid State Drive, SSD)), etc.

Those skilled in the art will understand that embodiments of the present application may be provided as methods, systems, or computer program products. Accordingly, the present application may take the form of an entirely hardware embodiment, an entirely software embodiment, or an embodiment that combines software and hardware aspects. Furthermore, the application may take the form of a computer program product implemented on one or more computer-usable storage media (including, but not limited to, magnetic disk storage and optical storage, etc.) embodying computer-usable program code therein.

The present application is described with reference to flowchart illustrations and/or block diagrams of methods, apparatus (systems), and computer program products according to embodiments of the application. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine such that the instructions executed by the processor of the computer or other programmable data processing device produce Means for implementing the functions specified in a process or processes in a flowchart and/or in a block or blocks in a block diagram.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction device implements the function specified in one process or multiple processes in the flow chart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block diagrams.

It should be noted that it should be understood that the division of each module above is only a division of logical functions. In actual implementation, it can be fully or partially integrated into a physical entity, or it can also be physically separated. These modules can all be implemented in the form of software calling through processing components; they can also all be implemented in the form of hardware; some modules can also be implemented in the form of software calling through processing components, and some modules can be implemented in the form of hardware. For example, the determination module can be a separate processing element, or can be integrated into a chip of the above device. In addition, it can also be stored in the memory of the above device in the form of program code, and can be processed by a certain processing element of the above device. Call and execute the functions of the above determined modules. The implementation of other modules is similar. In addition, all or part of these modules can be integrated together or implemented independently. The processing element described here may be an integrated circuit with signal processing capabilities. During the implementation process, each step of the above method or each of the above modules can be completed by instructions in the form of hardware integrated logic circuits or software in the processor element.

For example, each module, unit, sub-unit or sub-module may be one or more integrated circuits configured to implement the above method, such as: one or more Application Specific Integrated Circuits (ASICs), or one or Multiple microprocessors (digital signal processor, DSP), or one or more field programmable gate arrays (Field Programmable Gate Array, FPGA), etc. For another example, when one of the above modules is implemented in the form of a processing element scheduler code, the processing element can be a general-purpose processor, such as a central processing unit (Central Processing Unit, CPU) or other processors that can call the program code. For another example, these modules can be integrated together and implemented in the form of a system-on-a-chip (SOC).

The terms "first", "second", etc. in the description and claims of the present disclosure are used to distinguish similar objects and are not necessarily used to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, e.g., a process, method, system, product, or apparatus that encompasses a series of steps or units and need not be limited to those explicitly listed. Those steps or elements may instead include other steps or elements not expressly listed or inherent to the process, method, product or apparatus. In addition, the use of "and/or" in the description and claims indicates at least one of the connected objects, such as A and/or B and/or C, indicating the inclusion of A alone, B alone, C alone, and both A and B. There are 7 situations in which both B and C exist, both A and C exist, and A, B, and C all exist. Similarly, the use of "at least one of A and B" in this specification and in the claims should be understood to mean "A alone, B alone, or both A and B present."

The embodiments of the present disclosure have been described above in conjunction with the accompanying drawings. However, the present disclosure is not limited to the above-mentioned specific implementations. The above-mentioned specific implementations are only illustrative and not restrictive. Those of ordinary skill in the art will Inspired by this disclosure, many forms can be made without departing from the purpose of this disclosure and the scope of the claims, all of which fall within the protection of this disclosure.

## Claims

1. A relay selection method, comprising:
receiving, by a first user terminal, a relay discovery message sent by at least one relay user terminal, wherein the relay discovery message includes first indication information;
selecting, by the first user terminal, a previous hop relay user terminal to be accessed, according to the first indication information included in the relay discovery message;
wherein the first user terminal is a remote user terminal and/or a user terminal with a relay capability.

2. The method according to claim 1, wherein the first indication information comprises at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

3. The method according to claim 2, wherein the target object comprises: a target user terminal and/or a target network device.

4. The method according to claim 3, wherein the identification information of the target user terminal comprises: a direct communication target address of the target user terminal;
and/or,
identification information of the target network device comprises: a Public Land Mobile Network Identity (PLMN ID), and/or a cell ID.

5. The method according to claim 2, wherein the current state information of the relay user terminal comprises at least one of the following:
a power information of the relay user terminal;
load information of the relay user terminal; or
a speed of the relay user terminal.

6. The method according to claim 1, wherein when the first user terminal is a user terminal with the relay capability, prior to the selecting by the first user terminal the previous hop relay user terminal to be accessed according to the first indication information included in the relay discovery message, the method further comprises:
determining, by the user terminal with relay capability, whether to activate the relay capability.

7. The method according to claim 1, wherein when the first user terminal is a user terminal with the relay capability, prior to the selecting by the first user terminal the previous hop relay user terminal to be accessed according to the first indication information included in the relay discovery message, the method further comprises:
determining, based on the relay discovery message, by the user terminal with relay capability, whether the user terminal with the relay capability is capable of establishing a relay connection with the relay user terminal corresponding to the relay discovery message.

8. The method according to claim 7, wherein the determining, based on the relay discovery message, by the user terminal with relay capability, whether the user terminal with the relay capability is capable of establishing the relay connection with the relay user terminal corresponding to the relay discovery message comprises:
based on the relay discovery message, determining that the user terminal with relay capability is capable of establishing a relay connection with a relay user terminal that meets a first condition; wherein the first condition comprises at least one of the following:
the user terminal with relay capability supports a relay type currently used by the relay user terminal indicated by the relay discovery message;
load information of the relay user terminal indicated by the relay discovery message satisfies a second condition; or
current state information of the relay user terminal indicated by the relay discovery message satisfies a third condition.

9. The method according to claim 8, wherein the second condition comprises: a load of the relay user terminal is lower than a first threshold.

10. The method according to claim 8, wherein the third condition comprises at least one of the following:
a power of the relay user terminal is higher than a second threshold;
a speed of the relay user terminal is lower than a third threshold; or
a load of the relay user terminal is lower than a fourth threshold.

11. The method according to claim 8, wherein the selecting by the first user terminal the previous hop relay user terminal to be accessed according to the first indication information included in the relay discovery message comprises:
when a relay network only supports a single path, the user terminal with relay capability selecting a relay user terminal from the relay user terminals that meet the first condition as the previous hop relay user terminal to be accessed;
or,
when the relay network supports multipath, the user terminal with relay capability selecting one or more relay user terminals from the relay user terminals that meet the first condition as the previous hop relay user terminal to be accessed.

12. A relay selection method, comprising:
sending, by a relay user terminal, a relay discovery message to a first user terminal, wherein the relay discovery message includes first indication information;
wherein the first user terminal is a remote user terminal and/or a user terminal with a relay capability; the first indication information is configured to assist the first user terminal in selecting a previous hop relay user terminal to be accessed.

13. The method according to claim 12, wherein the first indication information comprises at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

14. The method according to claim 13, wherein the target object comprises: a target user terminal and/or a target network device.

15. The method according to claim 14, wherein the identification information of the target user terminal comprises: a direct communication target address of the target user terminal;
and/or,
identification information of the target network device comprises: a Public Land Mobile Network Identity (PLMN ID), and/or a cell ID.

16. The method according to claim 13, wherein the current state information of the relay user terminal comprises at least one of the following:
a power information of the relay user terminal;
load information of the relay user terminal; or
a speed of the relay user terminal.

17. A relay selection device, applied to a first user terminal, comprising:
a receiving unit, configured to receive a relay discovery message sent by at least one relay user terminal, wherein the relay discovery message includes first indication information;
a selection unit, configured to select a previous hop relay user terminal to be accessed, according to the first indication information included in the relay discovery message;
wherein the first user terminal is a remote user terminal and/or a user terminal with a relay capability.

18. A user terminal, wherein the user terminal is a first user terminal and comprising a memory, a transceiver, and a processor, wherein
the memory is configured to store computer programs; the transceiver is configured to send and receive data under a control of the processor; the processor is configured to read the computer programs in the memory to perform:
receiving a relay discovery message sent by at least one relay user terminal, wherein the relay discovery message includes first indication information;
selecting a previous hop relay user terminal to be accessed, according to the first indication information included in the relay discovery message;
wherein the first user terminal is a remote user terminal and/or a user terminal with a relay capability.

19. The user terminal according to claim 18, wherein the first indication information comprises at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

20. The user terminal according to claim 19, wherein the target object comprises: a target user terminal and/or a target network device.

21. The user terminal according to claim 20, wherein the identification information of the target user terminal comprises: a direct communication target address of the target user terminal;
and/or,
identification information of the target network device comprises: a Public Land Mobile Network Identity (PLMN ID), and/or a cell ID.

22. The user terminal according to claim 19, wherein the current state information of the relay user terminal comprises at least one of the following:
a power information of the relay user terminal;
load information of the relay user terminal; or
a speed of the relay user terminal.

23. The user terminal according to claim 18, wherein the processor is configured to read the computer programs in the memory to perform:
determining whether to activate the relay capability.

24. The user terminal according to claim 19, wherein the processor is configured to read the computer programs in the memory to perform:
determining, based on the relay discovery message, whether a relay connection with the relay user terminal corresponding to the relay discovery message is capable of being established.

25. The user terminal according to claim 24, wherein the processor is configured to read the computer programs in the memory to perform:
based on the relay discovery message, determining that the user terminal with relay capability is capable of establishing a relay connection with a relay user terminal that meets a first condition; wherein the first condition comprises at least one of the following:
the user terminal with relay capability supports a relay type currently used by the relay user terminal indicated by the relay discovery message;
load information of the relay user terminal indicated by the relay discovery message satisfies a second condition; or
current state information of the relay user terminal indicated by the relay discovery message satisfies a third condition.

26. The user terminal according to claim 25, wherein the second condition comprises: a load of the relay user terminal is lower than a first threshold.

27. The user terminal according to claim 25, wherein the third condition comprises at least one of the following:
a power of the relay user terminal is higher than a second threshold;
a speed of the relay user terminal is lower than a third threshold; or
a load of the relay user terminal is lower than a fourth threshold.

28. The user terminal according to claim 25, wherein the processor is configured to read the computer programs in the memory to perform:
when a relay network only supports a single path, selecting a relay user terminal from the relay user terminals that meet the first condition as the previous hop relay user terminal to be accessed;
or,
when the relay network supports multipath, selecting one or more relay user terminals from the relay user terminals that meet the first condition as the previous hop relay user terminal to be accessed.

29. A relay selection device, comprising:
a sending unit, configured to send a relay discovery message to a first user terminal, wherein the relay discovery message includes first indication information;
wherein the first user terminal is a remote user terminal and/or a user terminal with a relay capability; the first indication information is configured to assist the first user terminal in selecting a previous hop relay user terminal to be accessed.

30. A user terminal, wherein the user terminal is a relay user terminal, comprising a memory, a transceiver, and a processor, wherein
the memory is configured to store computer programs; the transceiver is configured to send and receive data under a control of the processor; the processor is configured to read the computer programs in the memory to perform:
send a relay discovery message to a first user terminal, wherein the relay discovery message includes first indication information;;
wherein the first user terminal is a remote user terminal and/or a user terminal with a relay capability; the first indication information is configured to assist the first user terminal in selecting a previous hop relay user terminal to be accessed.

31. The user terminal according to claim 30, wherein the first indication information comprises at least one of the following:
identification information of a target object capable of being accessed through the relay user terminal;
identification information of a target object capable of being accessed through each path corresponding to the relay user terminal;
a minimum number of hops required for the relay user terminal to access a target object;
a number of hops required for the relay user terminal to access a target object on each path corresponding to the relay user terminal;
a channel quality between the relay user terminal and a previous hop node of the relay user terminal on each path corresponding to the relay user terminal;
a channel quality between the two nodes of each hop on each path corresponding to the relay user terminal;
load information of the relay user terminal on each path corresponding to the relay user terminal;
load information of the relay user terminal corresponding to each hop on each path corresponding to the relay user terminal;
a relay type currently used by the relay user terminal;
current state information of the relay user terminal; or
system information required for accessing a target object.

32. The user terminal according to claim 31, wherein the target object comprises: a target user terminal and/or a target network device.

33. The user terminal according to claim 32, wherein the identification information of the target user terminal comprises: a direct communication target address of the target user terminal;
and/or,
identification information of the target network device comprises: a Public Land Mobile Network Identity (PLMN ID), and/or a cell ID.

34. The user terminal according to claim 31, wherein the current state information of the relay user terminal comprises at least one of the following:
a power information of the relay user terminal;
load information of the relay user terminal; or
a speed of the relay user terminal.

35. A processor-readable storage medium, wherein a computer program is stored in the processor-readable storage medium, wherein the computer program is configured to enable the processor to perform the method according to any one of claims 1 to 11, or the computer program is configured to enable the processor to perform the method according to any one of claims 12 to 16.
